# FASCICULE DE BREVET EUROPEEN

(11) **EP 0 811 455 B1**
(45) Date de publication et mention de la délivrance du brevet: **11.12.2002**
(21) Numéro de dépôt: 97401267.6
(22) Date de dépôt: 05.06.1997
(51) Int. Cl.: B23Q 1/00, B23Q 3/155

(54) **Dispositif de contrôle de la bonne exécution d'un emmanchement automatique de deux pièces**
Kontrollvorrichtung von der korrekten automatischen Einsteckverbindung zweier Teile
Device controlling the proper automatic fitting of two pieces

(30) Priorité: 07.06.1996 FR 9607093
(43) Date de publication de la demande: 10.12.1997
(73) Titulaire: Renault Automation Comau, 92365 Meudon La Forêt Cedex (FR)
(72) Inventeur: Thurier, Yvan, 94320 Thiais (FR)
(74) Mandataire: Robert, Jean-Pierre

(56) Documents cités:
- DE-A- 3 812 527
- US-A- 4 281 447
- US-A- 4 652 203
- US-A- 5 425 133

## Description

L'emmanchement automatique d'une pièce dans un logement demande à être contrôlé.

Aujourd'hui le contrôle de cette opération est réalisé au moyen de capteurs qui permettent de recueillir d'une part une information sur la force développée par l'outil au cours de l'emmanchement et, d'autre part une information concernant le déplacement relatif des pièces assemblées de la sorte.

En présence de ces informations, un emmanchement est validé si, entre deux positions relatives initiales et finales des pièces à emmancher, l'effort d'emmanchement reste supérieur à une valeur déterminée. En effet si cette condition n'est pas réalisée, parce que la force a disparu au cours de l'opération, parce que cette force n'a jamais atteint la valeur déterminée formant un seuil, parce que l'une ou l'autre des positions n'ont pas été atteintes... l'emmanchement peut être trop libre (avec du jeu) d'où un démanchement spontané possible des pièces, peut n'avoir pas eu lieu du fait d'un décalage des pièces à emmancher ou peut n'avoir pas été achevé du fait d'un blocage des pièces l'une dans l'autre avant d'avoir atteint une position finale.

Dans les dispositifs actuels, l'installation mise en oeuvre associée à ces capteurs comprend une unité électronique de traitement des signaux qui peut être paramétrée par l'opérateur. On s'est rendu compte que les réglages initiaux d'une telle installation, reflétant le cahier des charges de l'emmanchement à réaliser, sont souvent modifiés en cours d'utilisation pour diminuer le taux de rebut qui peut être jugé trop élevé par l'opérateur et ce, au détriment des exigences du cahier des charges si bien que des emmanchements défectueux se trouvent déclarés bons par l'unité électronique volontairement déréglée.

Par ailleurs, l'acquisition des informations et leur traitement par l'unité logique d'un automate demande de rendre les signaux émis par les capteurs compatibles et synchronisés, ce qui est une complication de mise en oeuvre. Pour pallier les inconvénients des dispositions connues, l'invention a pour objet un dispositif dédié, dans lequel certains des paramètres ne sont pas convertis en grandeurs électroniques, notamment en ce qui concerne la valeur du seuil de l'effort qui doit être constamment dépassé pour que l'emmanchement soit validé. Il s'ensuit un appareil plus simple et de mise en oeuvre plus fiable.

A cet effet, l'invention a donc pour objet un dispositif pour l'emmanchement automatique de deux pièces et le contrôle de la bonne exécution de ce dernier, qui comprend un organe moteur, un outil d'emmanchement et un adaptateur interposé entre eux. L'adaptateur comporte, conformément à la partie caractéristique de la revendication 1 :
- deux parties montées à coulissement l'une par rapport à l'autre le long de l'axe longitudinal, entre une première position relative où elles sont en appui axial l'une contre l'autre, définissant l'état étendu de l'adaptateur et une seconde position relative où elles sont en appui axial l'une contre l'autre, définissant l'état rétracté de l'adaptateur,
- un organe élastique attelé entre ces deux parties et dont l'effet tend à les maintenir dans leur première position relative sous un effort déterminé,
- un premier capteur embarqué sur l'adaptateur sensible aux positions relatives des deux parties et délivrant un signal à deux états selon que les parties de l'adaptateur sont dans l'une ou l'autre de leur position relative et au moins un deuxième capteur embarqué sur l'adaptateur sensible à la position de ce dernier par rapport à une butée fixe de fin de course et délivrant un signal à deux états selon qu'il est ou non au contact de cette butée de fin de course tandis que le dispositif comprend par ailleurs une unité de traitement des signaux délivrés par les deux capteurs qui présente en sortie un signal de validation de l'emmanchement lorsque les signaux des capteurs sont simultanément dans leur état correspondant respectivement à la seconde position des deux parties de l'adaptateur et au contact du second capteur avec la butée de fin de course.

Le dispositif de l'invention transmet à l'unité de traitement des signaux correspondant à des états constatés et non des signaux dont l'intensité est proportionnelle à une grandeur variable telle par exemple que la force d'emmanchement. La force d'emmanchement est quant à elle fixée par construction une fois pour toute au moyen de l'organe élastique que comprend l'adaptateur. Bien entendu la force d'emmanchement peut être choisie parmi plusieurs d'entre elles en mettant en oeuvre des ressorts différents à l'intérieur même de l'adaptateur ou en tarant le ressort de manière réglable. Cette intervention cependant ne sera pas accessible à l'opérateur responsable de l'emmanchement mais simplement à un personnel habilité à procéder aux réglages.

Avantageusement le dispositif comporte un troisième capteur embarqué sur l'adaptateur, sensible à la position de ce dernier par rapport au début de l'opération d'emmanchement et délivrant un signal à deux états selon qu'il est ou non en contact avec une butée de début de course d'emmanchement.

La présence de ce troisième capteur permet de contrôler (par exemple au moyen d'une fonction logique ET) que les signaux émis par les deux autres capteurs correspondent bien à une opération d'emmanchement.

Par ailleurs l'unité de traitement élabore un second signal de sortie à deux états, l'un de ces états étant réalisé depuis le changement d'état du signal du premier capteur au début de l'emmanchement jusqu'au changement d'état du signal du troisième capteur après la réalisation de l'emmanchement, au cours de la course de retour de l'organe moteur, ce signal de sortie étant représentatif dans son autre état de l'état de repos du dispositif. Il est en effet nécessaire qu'un automate gérant le fonctionnement du dispositif d'emmanchement connaisse à tout instant l'état en service ou l'état de repos de ce dispositif.

D'autres caractéristiques et avantages de l'invention ressortiront de la description donnée ci-après d'un exemple de réalisation.

Il sera fait référence aux dessins annexés parmi lesquels :
- la figure 1 est une vue en coupe axiale du dispositif selon l'invention selon le plan de coupe brisé I-I de la figure 2,
- la figure 2 est une coupe transversale de ce dispositif selon le plan de coupe brisé II-II de la figure 3 avec un schéma de l'unité de traitement logique des signaux émis par les capteurs mis en oeuvre,
- la figure 3 est une vue de dessus du dispositif de l'invention,
- la figure 4 est un graphe de l'état des signaux émis par les capteurs et l'unité de traitement lors d'un emmanchement normal.

Le dispositif de l'invention comprend un outil 1 d'emmanchement, un organe moteur non représenté, avec un nez 2 et en adaptateur D interposé entre l'outil 1 et le nez 2, présentant des moyens d'accouplement à l'outil 1 et au nez 2 correspondant à ceux de l'accouplement direct de l'outil 1 à ce nez 2 (un alésage la pour recevoir la queue de l'outil 1 et une queue 2a pour être logée dans l'alésage correspondant du nez 2).

L'adaptateur D comporte un manchon 3 à l'intérieur duquel est monté à coulissement un piston 4 dont une extrémité se prolonge à l'extérieur du manchon par la queue 2a, ce piston possédant une collerette 5 qui peut prendre appui sur deux épaulements opposés 6a et 6b à l'intérieur du manchon 3 selon que l'adaptateur est dans son état étendu ou son état rétracté. Un ressort 7 disposé à l'intérieur du manchon 3 entre ce dernier et le piston 4, force la collerette 5 en appui sur l'épaulement 6a sous un effort déterminé.

Le piston 4 se prolonge à l'intérieur du manchon par une tige 8 dont une extrémité 9 est par exemple en matériau non métallique, le reste de la tige 10 étant en matériau métallique. Un capteur radial 11 est implanté sur le manchon 3 et son extrémité 11a est en contact avec la tige 8 et en regard de son extrémité 9 lorsque l'adaptateur est dans son état étendu, c'est-à-dire lorsque le ressort 7 force la collerette 5 en appui sur l'épaulement 6a. Lorsque le ressort 7 est comprimé sous l'effort imprimé dans la direction A au piston 4 par l'organe moteur alors que l'outil 1 rencontre un effort résistant, la collerette 5 vient en appui sur l'épaulement 6b du manchon 3 et l'extrémité 11a du capteur 11 se trouve au contact, au moins partiellement, de la partie métallique 10 de la tige 8. Le capteur ou détecteur 11 émet donc un signal à deux états différents selon qu'il est en face du matériau 9 ou du matériau 10. Le dispositif de contrôle selon l'invention comporte également des moyens pour détecter la position du manchon 3 dans un repère lié par exemple à la pièce réceptrice de la pièce manoeuvrée par l'outil 1. Dans le mode de réalisation représenté, le repère est celui lié à une butée 12, les moyens de détection étant réalisés sous la forme de doigts 13 et 14, chacun monté coulissant dans un logement 15 et 16 du manchon 3 et faisant saillie par une de leurs extrémités 13a en direction de la butée 12. Chacun de ces doigts est associé à un capteur 17, 18 embarqué avec le manchon 3 pour détecter la position relative du doigt correspondant par rapport au manchon 3.

Chaque doigt, par exemple le doigt 13, comporte un noyau 20 pourvu d'une broche transversale 21 sur laquelle viennent s'appuyer deux chemises 22 et 23 consécutives sous l'effet d'un ressort 24 qui tend à faire saillir le doigt 13 hors du logement 15 où il est monté à coulissement. Les détecteurs 17 et 18 sont du même type que le détecteur 11. Ce sont des capteurs sensibles à la nature métallique ou non métallique du matériau avec lequel ils sont en contact. C'est pourquoi chaque doigt possède un noyau revêtu d'une chemise 22 par exemple métallique et d'une chemise 23 contiguë par exemple non métallique, les détecteurs 17 et 18 étant normalement au contact de la partie non métallique 23 du doigt 13, 14 correspondant lorsque celui-ci est en saillie sans entrave hors de son logement.

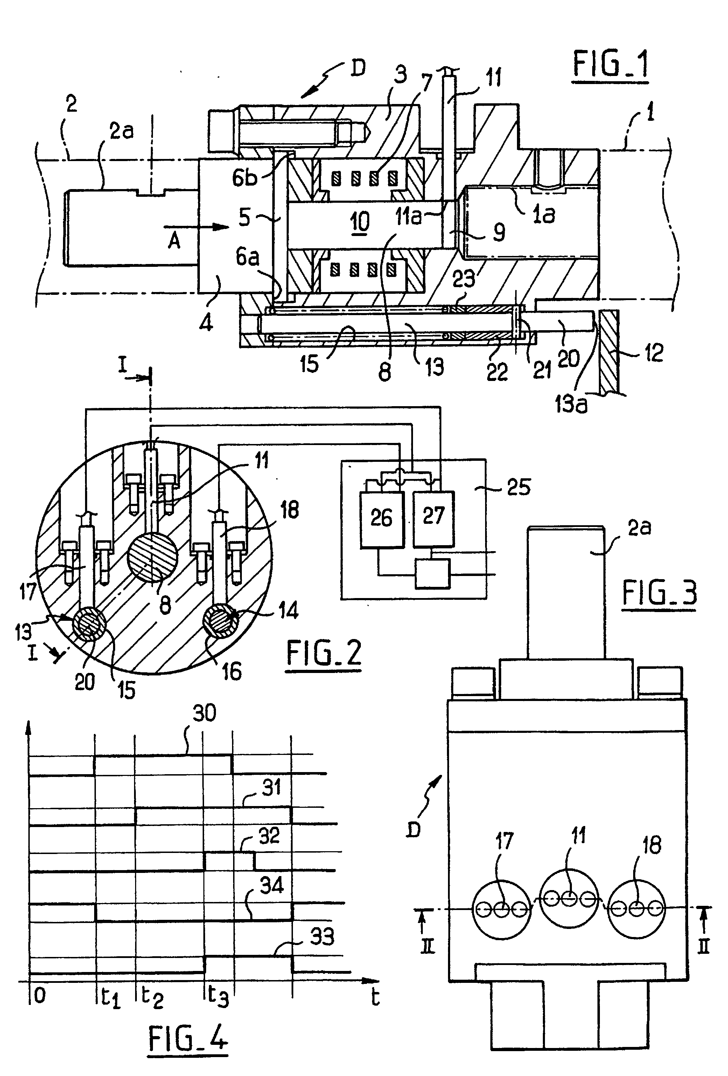

On supposera que les détecteurs 11, 17 et 18 délivrent en sortie un signal de niveau bas lorsqu'ils sont en regard d'un matériau non métallique et un signal de niveau haut lorsqu'ils sont en regard d'un matériau métallique. Sur le graphe de la figure 4, la courbe 30 est l'image en fonction du temps du signal délivré par le capteur 11. Il en est de même pour les courbes 31 et 32 qui sont respectivement les images du signal en fonction du temps délivré par les capteurs 17 et 18. Ces signaux sont présents en permanence à l'entrée d'une unité de traitement électronique 25 qui par exemple au moyen d'une première unité logique 26 élabore un premier signal de sortie de l'unité, à deux états, dont l'image est représentée par la courbe 33 de la figure 4. Un second traitement peut être appliqué aux signaux issus du capteur 11 et du capteur 17 par un circuit logique 27 pour délivrer un second signal en sortie de l'unité 25. Ce second signal peut également constituer à l'intérieur de l'unité 25, un signal d'autorisation d'établissement à son niveau haut du premier signal de sortie 33 de l'unité 25.

Au début de l'opération d'emmanchement, la pièce à emmancher est soumise à une résistance à sa pénétration dans l'autre pièce. Si cette résistance est supérieure au seuil établi par la précontrainte du ressort 7, celui-ci s'écrase et la tige 8 du piston 4 se déplace par rapport au capteur 11. Ce déplacement se produit au temps t1 de la figure 4 et le signal 30 de sortie du capteur 11 change d'état pour passer au niveau haut. L'enfoncement peut alors commencer puisque le piston 4 entraîne l'outil 1 par l'intermédiaire de la collerette 5 qui prend appui sur l'épaulement 6b du manchon 3. Au moment t2 où le doigt 13 vient au contact de la butée 12, le signal de sortie du capteur associé 17 change d'état comme illustré par la courbe 31. Enfin, le doigt 14 atteint lui aussi la butée 12 (ou une butée équivalente qui est associée à la butée 12 donc à l'élément par exemple femelle recevant par emmanchement l'élément mâle propulsé par l'organe 2) le signal de sortie du capteur associé 18 change d'état au temps t3 comme indiqué par la courbe 32. A cet instant les trois signaux présents à l'entrée de l'unité 25 sont à leur niveau haut, ce qui permet à l'unité 26 de changer l'état du premier signal de sortie de l'unité 25 comme illustré par la courbe 33 de la figure 4. Ce changement d'état constitue l'information selon laquelle on est certain que l'emmanchement a été correctement réalisé. Il est transmis à une installation logique d'exploitation par exemple un automate. Le passage du signal 32 à son niveau haut constitue par ailleurs un signal de fin de course de l'outil d'emmanchement et de l'inversion de son mouvement.

On notera enfin sur la figure 4 la présence d'une cinquième courbe 34. Elle représente l'état d'un signal, par exemple élaboré par un circuit logique 27 appartenant à l'unité de traitement 25, dont l'état bas est commandé par le passage au temps t1 à l'état haut du signal du capteur 11 et dont l'état haut est obtenu lorsque le doigt 13 est hors de contact de la butée 12 et que le signal 31 du capteur 17 retombe à son état le plus bas. Le signal 34 constitue un deuxième signal de sortie de l'unité 25 qui peut être exploité par une installation du genre automate qui reconnaîtra les deux états de ce signal, l'état haut étant l'image de l'état de repos c'est-à-dire non actif de l'unité d'emmanchement. Enfin, le signal 33 lorsqu'il est à son état haut, interdit au signal 34 de s'établir à son niveau le plus haut.

## Revendications

1. Dispositif pour réaliser automatiquement un emmanchement de deux pièces et contrôler la bonne exécution de cet emmanchement, comprenant un outil d'emmanchement (1), un organe moteur (2) susceptible de lui communiquer un mouvement rectiligne alternatif et, interposé entre eux, un adaptateur (D) avec un axe longitudinal parallèle à la direction du mouvement rectiligne, pourvu à l'une de ses extrémités axiales de moyens (1a) de fixation de l'outil (1) et à l'autre de ses extrémités axiales de moyens (2a) pour sa fixation à l'organe moteur (2), **caractérisé en ce que** l'adaptateur (D) comporte :
- deux parties (3, 4) montées à coulissement l'une par rapport à l'autre le long de l'axe longitudinal entre une première position relative où elles sont en appui axial l'une contre l'autre définissant l'état étendu de l'adaptateur (D) et une seconde position relative où elles sont en appui axial l'une contre l'autre définissant l'état rétracté de l'adaptateur,
- un organe élastique (7) attelé entre ces deux parties (3 et 4) et dont l'effet tend à les maintenir dans leur première position relative sous un effort déterminé,
- un premier capteur (11) embarqué avec l'adaptateur, sensible aux positions relatives des deux parties (3 et 4) et délivrant un signal à deux états selon que les parties (3 et 4) de l'adaptateur (D) sont dans l'une ou l'autre de leur position relative et au moins un deuxième capteur (18) embarqué avec l'adaptateur (D), sensible à la position de ce dernier par rapport à une butée (12) fixe de fin de course et délivrant un signal à deux états selon que cette butée fixe de fin de course est ou non atteinte et,
**en ce qu'**il comprend une unité de traitement (25) des signaux délivrés par les deux capteurs qui présentent en sortie un signal de validation de l'emmanchement lorsque les signaux des capteurs sont simultanément dans leur état correspondant respectivement, à la seconde position des deux parties (3 et 4) de l'adaptateur, et à la fin de la course d'emmanchement de l'adaptateur (D).

2. Dispositif selon la revendication 1, **caractérisé en ce qu'**il comporte un troisième capteur (17) embarqué avec l'adaptateur (D) sensible au début de l'opération d'emmanchement et délivrant un signal à deux états selon que la course d'emmanchement de l'adaptateur a ou non commencé.

3. Dispositif selon la revendication 2, **caractérisé en ce que** l'unité de traitement (25) élabore un second signal de sortie à deux états, l'un de ces états étant établi à partir du changement d'état du signal du premier capteur (11) au début de l'emmanchement et étant maintenu jusqu'au changement d'état du signal du troisième capteur (17) après réalisation de l'emmanchement au cours de la course de retour de l'adaptateur, ce second signal de sortie étant représentatif, dans son autre, état de l'état inactif du dispositif.

4. Dispositif selon l'une des revendications précédentes, **caractérisé en ce que** chaque capteur (11, 17, 18) comporte un organe sensible en contact avec l'élément mobile dont la position est surveillée, cet élément mobile (4, 13, 14) comportant une portion (9, 23) réalisée dans un matériau non métallique, une seconde portion (10, 22) de l'élément étant métallique, la portion non métallique étant au contact de l'organe sensible du capteur (11, 17, 18) lorsque l'élément mobile (4, 13, 14) est dans son état de repos.

## Patentansprüche

1. Vorrichtung zum automatischen Ineinanderstecken von zwei Teilen und zum Kontrollieren der korrekten Ausführung dieses Ineinandersteckens, umfassend ein Einsteckwerkzeug (1), ein Antriebsorgan (2), das dazu geeignet ist, auf dieses eine geradlinige Hin- und Herbewegung zu übertragen, und einen zwischen diesen angeordneten Adapter (D) mit einer Längsachse, die parallel zur geradlinigen Bewegungsrichtung verläuft, wobei der Adapter an einem seiner axialen Enden mit Mitteln (1a) zur Befestigung des Werkzeuges (1) und an dem anderen seiner axialen Enden mit Mitteln (2a) für seine Befestigung an dem Antriebsorgan (2) versehen ist, **dadurch gekennzeichnet, daß** der Adapter (D) umfaßt:
- zwei Teile (3, 4), die entlang der Längsachse zwischen einer ersten Relativposition, in der sie axial aneinander anliegen und den ausgefahrenen Zustand des Adapters (D) festlegen, und einer zweiten Relativposition zueinander verschiebbar gelagert sind, in der sie axial aneinander anliegen und den eingefahrenen Zustand des Adapters festlegen,
- ein elastisches Organ (7), das zwischen diesen beiden Teilen (3 und 4) gekoppelt ist und dessen Wirkung dazu neigt, diese mit einer vorgegebenen Kraft in ihrer ersten Relativposition zu halten,
- einen ersten in den Adapter integrierten Sensor (11), der auf die Relativpositionen der beiden Teile (3 und 4) anspricht und ein Signal mit zwei Zuständen liefert, gemäß denen die Teile (3 und 4) des Adapters (D) in ihrer einen oder ihrer anderen Relativposition sind, sowie mindestens einen zweiten Sensor (18), der in den Adapter (D) integriert ist, auf die Position dieses letztgenannten relativ zu einem ortsfesten Anschlag (12) am Hubende anspricht und ein Signal mit zwei Zuständen liefert, gemäß denen dieser ortsfeste Anschlag am Hubende erreicht ist oder nicht, und
daß sie eine Verarbeitungseinheit (25) zur Verarbeitung der von den beiden Sensoren gelieferten Signale hat, die am Ausgang ein Gültigkeitssignal über die Gültigkeit des Ineinandersteckens bereitstellt, wenn die Signale der Sensoren gleichzeitig in ihrem Zustand entsprechend der zweiten Position der beiden Teile (3 und 4) des Adapters bzw. dem Ende des Einsteckhubes des Adapters (D) sind.

2. Vorrichtung nach Anspruch 1, **dadurch gekennzeichnet, daß** sie einen dritten in den Adapter (D) integrierten Sensor (17) enthält, der auf den Beginn des Einsteckvorgangs anspricht und ein Signal mit zwei Zuständen liefert, gemäß denen der Einsteckhub des Adapters begonnen hat oder nicht.

3. Vorrichtung nach Anspruch 2, **dadurch gekennzeichnet, daß** die Verarbeitungseinheit (25) ein zweites Ausgangssignal mit zwei Zuständen erzeugt, wobei einer dieser Zustände ab der Zustandsänderung des Signals des ersten Sensors (11) zu Beginn des Ineinandersteckens eintritt und bis zur Zustandsänderung des Signals des dritten Sensors (17) nach dem Ausführen des Ineinandersteckens während des Rückwärtshubes des Adapters gehalten wird, wobei dieses zweite Ausgangssignal in seinem anderen Zustand repräsentativ für den inaktiven Zustand der Vorrichtung ist.

4. Vorrichtung nach einem der vorhergehenden Ansprüche, **dadurch gekennzeichnet, daß** jeder Sensor (11, 17, 18) ein Fühlerelement hat, das mit dem beweglichen Element, dessen Position überwacht wird, in Kontakt steht, wobei dieses bewegliche Element (4, 13, 14) einen Abschnitt (9, 23) hat, der aus einem nicht metallenen Material ausgebildet ist, wobei ein zweiter Abschnitt (10, 22) des Elements aus Metall ist und wobei der nicht metallene Abschnitt mit dem Fühlerelement des Sensors (11, 17, 18) in Kontakt steht, wenn das bewegliche Element (4, 13, 14) in seinem Ruhezustand ist.

## Claims

1. Apparatus for automatically engaging two pieces one in the other and for verifying that said engagement has been carried out properly, the apparatus comprising an engagement tool (1), a drive member (2) suitable for imparting reciprocating rectilinear motion thereto, and an adaptor (D) located between them, the adaptor having a longitudinal axis parallel to the direction of rectilinear motion, and being provided at one of its axial ends with means (1a) for fastening to the tool (1) and at its other axial end with means (2a) for fixing to the drive member (2), the apparatus being **characterized in that** the adaptor (D) comprises:
· two portions (3, 4) mounted to slide one relative to the other along the longitudinal axis between a first relative position in which they press axially against each other defining the extended state of the adaptor (D), and a second relative position in which they press axially against each other defining the retracted state of the adaptor;
· a resilient member (7) coupled between said two portions (3 and 4) tending to hold them in their first relative position under a determined force; and
· a first sensor (11) on the adaptor and responsive to the relative positions of the two portions (3 and 4) to deliver a two-state signal depending on whether the portions (3 and 4) of the adaptor (D) are in one or the other of their relative positions, and at least one second sensor (18) on the adaptor (D) and responsive to the position thereof relative to a fixed end-of-stroke abutment (12) and delivering a two-state signal depending on whether or not said fixed end-of-stroke abutment has been reached, and
**in that** the apparatus includes a processor unit (25) for processing the signals delivered by the two sensors and outputting a signal confirming engagement when the signals from the sensors are both simultaneously in their states corresponding respectively to the two portions (3 and 4) of the adaptor being in the second position and to the adaptor (D) being in its position corresponding to the end of its engagement stroke.

2. Apparatus according to claim 1, **characterized in that** it includes a third sensor (17) on the adaptor (D) and responsive to the beginning of the engagement operation to deliver a two-state signal depending on whether or not the adaptor has begun its engagement stroke.

3. Apparatus according to claim 2, **characterized in that** the processor unit (25) generates a second two-state output signal, one of its states being established starting from a change of state in the signal from the first sensor (11) at the beginning of engagement and being maintained until a change of state in the signal from the third sensor (17) after engagement has been achieved during the return stroke of the adaptor, said second output signal in its other state being representative of the apparatus being in the inactive state.

4. Apparatus according to any preceding claim, **characterized in that** each sensor (11, 17, 18) comprises a member that is responsive to contact with the moving element whose position it is monitoring, said moving element (4, 13, 14) having a portion (9, 23) made of a non-metallic material, a second portion (10, 22) of the element being metallic, the non-metallic portion coming into contact with the sensing member of the sensor (11, 17, 18) when the moving embodiment (4, 13, 14) is in its rest state.
